Europäisches Patentamt

(19) European Patent Office

Office européen des brevets

(11) Publication number: **0 069 459**

**B1**

(12) **EUROPEAN PATENT SPECIFICATION**

(45) Date of publication of patent specification: **27.08.86**

(51) Int. Cl.⁴: **G 01 F 1/58**

(21) Application number: **82302770.1**

(22) Date of filing: **28.05.82**

(54) **Measuring device of electromagnetic flowmeter.**

(30) Priority: **05.06.81 JP 87106/81**

(43) Date of publication of application:
**12.01.83 Bulletin 83/02**

(45) Publication of the grant of the patent:
**27.08.86 Bulletin 86/35**

(84) Designated Contracting States:
**DE FR GB NL**

(56) References cited:
**JP-A-56 054 565**
**US-A-3 937 080**
**US-A-4 065 965**
**US-A-4 214 477**
**US-A-4 253 340**

(73) Proprietor: **Aichi Tokei Denki Co., Ltd.**
**2-70, Chitose 1-chome**
**Atsuta-ku, Nagoya (JP)**

(72) Inventor: **Ueno, Kazuo c/o AICHI TOKEI DENKI**
**CO., LTD.**
**2-70, Chitose-1-chome**
**Atsuta-ku Nagoya (JP)**

(74) Representative: **Nettleton, John Victor et al**
**Abel & Imray Northumberland House 303-306**
**High Holborn**
**London, WC1V 7LH (GB)**

The file contains technical information
submitted after the application was filed and
not included in this specification

Courier Press, Leamington Spa, England.

## Description

This invention relates to a measuring device for an electromagnetic flowmeter which does not require a large amount of exciting power and can therefore operate with a relatively small amount of power consumption in spite of the fact that it has a relatively large diameter.

It is a primary object of the present invention to provide a measuring device of an electromagnetic flowmeter which can save the power consumption by effective utilization of the magnetic flux.

US—A—3 937 080 discloses an electromagnetic apparatus installable in a large diameter pipeline for measuring the flow velocity of an electrically conductive fluid in the pipeline. The apparatus comprises two pipe portions of different diameters, one positioned inside the other. Exciting coils for producing a magnetic field are located in the space between the pipe portions. Electrodes of a first group are positioned on the external surface of the outer pipe portion and electrodes of a second group are positioned on the inner surface of the internal pipe portion.

Japanese Patent Specification 56-54565 discloses an electromagnetic flowmeter with radial magnetic flux extending over 360°. A pair of electromagnets for generating the radial flux are arranged within an insulated housing located along the central axis of a conduit through which fluid passes. The electromagnets are arranged tandem fashion with like poles facing each other and the conduit has an insulating lining.

The invention as claimed provides a measuring device for an electromagnetic flowmeter comprising; a flow-rate measuring pipe having a generally circular cross-section and made of non-magnetic material, at least the inner surface of the measuring pipe being an electrical insulator, a housing of non-magnetic material located inside the measuring pipe in coaxial relation therewith, the housing containing an exciting coil wound on an inner yoke of magnetic material for applying a magnetic field in a direction orthogonal with respect to the flow direction of a fluid flowing through the measuring pipe thereby generating a voltage in a direction orthogonal with respect to both the flow direction of the fluid and the direction of application of the magnetic field, at least one pair of electrodes from which the induced voltage is taken, in use, for measuring the velocity of the fluid flowing through the measuring pipe, and electrically insulating supporting members fixedly supporting said housing in the measuring pipe characterized by: an outer yoke disposed outside of said measuring pipe so as to surround the measuring pipe, a pair of magnetic poles connected to said inner yoke and disposed relative to said measuring pipe in such a relation that the outer peripheral surfaces thereof are substantially spaced apart, in use, by the same distance from the inner peripheral surface of said measuring pipe, and each of said magnetic poles extending over a predetermined angular range constituting a total circumference angle substantially less than 360°.

The present invention takes into account the mode of appearance of the induced voltage indicative of the flow rate of a fluid being measured by a measuring device of and electromagnetic flowmeter of internal excitation type. The fact that the magnetic poles are disposed within a predetermined circumference angle substantially less than 360° avoids disturbing the appearance of the induced output voltage, and the distance between the magnetic poles and the outer yoke disposed on the outer periphery of the flow-rate measuring pipe is shortened so as to increase the permeance.

Ways of carrying out the invention are described in detail below with reference to drawings which illustrate two specific embodiments, in which:

Fig. 1A is a schematic cross-sectional view showing the structure of a preferred embodiment of the measuring device of the electromagnetic flowmeter according to the present invention, the section being taken along the line IA—IA in Fig. 1B;

Fig. 1B is a longitudinal sectional view taken along the line IB—IB in Fig. 1A;

Fig. 2 shows schematically the distribution of the magnetic field lines produced by the magnetic poles;

Fig. 3 shows schematically the distribution of the induced voltage in the embodiment shown in Fig. 1A;

Fig. 4 is a schematic cross-sectional view showing the structure of another preferred embodiment of the present invention which differs from that shown in Fig. 1A in both the cone support arrangement and the electrode arrangement;

Fig. 5 is a schematic enlarged view showing in detail the distribution of the magnetic potential and the lines of magnetic force produced by the magnetic poles; and

Fig. 6 is a schematic enlarged view showing in detail the distribution of the degree of voltage which is induced between electrodes in conjunction with magnetic flux and flowrate.

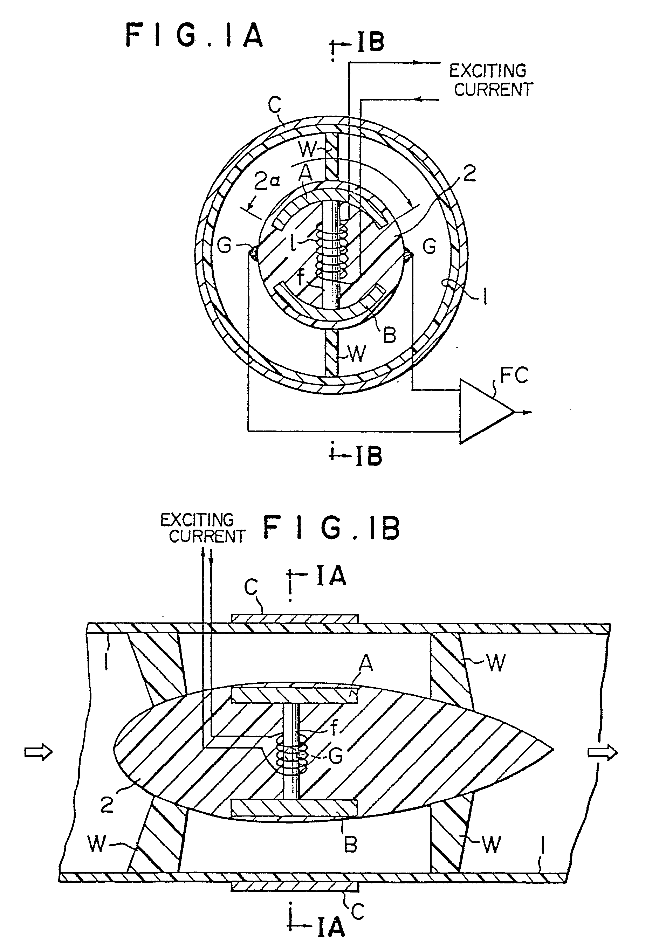

Referring to Figs. 1A and 1B, a preferred embodiment of the measuring device includes a flow-rate measuring pipe 1 through which a fluid whose flow rate is to be measured flows. This pipe 1 is made of a non-magnetic material which is an electrical insulator in itself or which is provided with an electrical insulating coating on its inner wall. A fusiform or streamlined cone 2 having generally circular cross section is disposed inside of the pipe 1 and is fixedly supported in coaxial relation with the pipe 1 by two supporting members W. The cone 2 is made of a non-magnetic material which is an electrical insulator in itself or which is provided with an electrical insulating coating on the surface making contact with the fluid. A pair of magnetic poles $A$ and $B$ are disposed opposite to each other in the diametrical direction of the cone 2 and extend along the outer periphery of the cone 2 over a suitable circumference angle of $2\alpha$ as shown in Fig. 1A. The magnetic poles A and B are coated with an electrical insulating coating on the surface making contact with the fluid. An inner yoke (a core) $f$ having an exciting coil $l$ wound therearound for generating a

2

magnetomotive force is disposed in the cone 2 between the magnetic poles A and B to be connected to the poles. A pair of electrodes G are provided on the outer periphery of the cone 2 at about the middle of the gap between the magnetic poles A and B. An outer yoke C made of a magnetic material and having a generally annular cross section is disposed around the pipe 1 in concentric relation with the pipe 1. The material of the inner yoke f generating the magnetomotive force may be any one of soft and hard ferromagnetic materials.

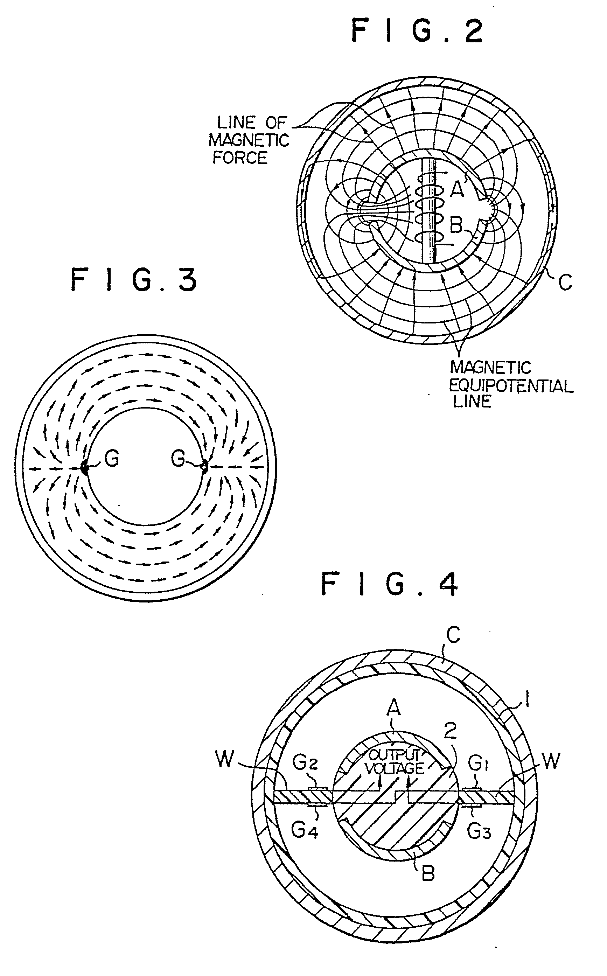

When exciting current is supplied to the exciting coil I, some of the lines of magnetic force flow out from the magnetic pole A to return to the magnetic pole B through the outer yoke C, and the remainder flow out from the magnetic pole A to return directly to the magnetic pole B, as shown by the arrows in Fig. 2. In the areas in which the magnetic poles A and B are opposed by the corresponding portions of the outer yoke C, the lines of magnetic force are directed mainly in the radial direction of the flow-rate measuring pipe 1. In Fig. 2, the pipe 1 and the electrodes G are not shown to avoid confusion of the illustration. Voltages are generated in a direction orthogonal with respect to the flow rate direction which is orthogonal with respect to the drawing sheet surface and in a direction generally orthogonal with respect to the lines of magnetic force shown in Fig. 2. Fig. 3 shows the mode of generation of the voltage which is described above. It will be seen from Fig. 3 that the induced voltage indicative of the flow rate of a fluid flowing through the pipe 1 appears along the magnetic equipotential lines shown in Fig. 2. The voltage thus generated is derived from the electrodes G and is applied to a flow-rate calculating unit FC to appear as a flow rate signal. A flow-rate calculating circuit as disclosed in United States Patent No. 4,227,408 may be used as this flow-rate calculating unit FC.

Fig. 4 shows another embodiment of the present invention which differs from the embodiment shown in Fig. 1A in both the cone support arrangement and the electrode arrangement. Referring to Fig. 4, two supporting members W are aligned on the same diametrical line of a flow-rate measuring pipe 1 for fixedly supporting a fusiform or streamlined cone 2 in the pipe 1. These supporting members W extend from the outer periphery of the cone 2 toward the flow-rate measuring pipe 1 at about the middle of the gap between a pair of magnetic poles A and B and are fixed at the other end to the inner wall of the pipe 1. The pipe 1, cone 2 and supporting members W are made of a non-magnetic material which is an electrical insulator in itself or which is provided with an electrical insulating coating on at least the surface making contact with the fluid. Similarly, the magnetic poles A and B are coated with an electrical insulating coating on at least the surface making contact with the fluid. A total of four electrodes $G_1$, $G_2$, $G_3$ and $G_4$ are disposed on the surfaces of the two supporting members W opposite to the inner circumference of the pipe 1 as shown. Induced voltages appearing across the electrodes $G_1$, $G_2$ and $G_3$, $G_4$ have the same level.

As will be apparent from Fig. 3, the direction of the generated voltage changes most sharply at the disposed positions of the supporting members W, and an abrupt variation of the distribution of the velocity of the fluid in these areas results immediately in a corresponding abrupt variation of the output voltage. For the purpose of preventing such an abrupt variation of the output voltage, the supporting members W are disposed in the areas where the direction of the generated voltage changes most sharply, and the electrical leads provided in the cone 2 are passed through the interior of the supporting members W to be led to the exterior. It will be seen from the voltage distribution pattern shown in Fig. 3 that the direction of generation of the voltage changes sharply in the vicinity of the electrodes G. Actually, the electrodes G are disposed at the positions shown in Fig. 4, because the electrodes G are concealed by the supporting members W when the supporting members W are disposed at the positions shown in Fig. 3. The four electrodes $G_1$, $G_2$, $G_3$ and $G_4$ are electrically insulated from one another. These electrodes may be connected in such a relation that the voltage across the electrodes $G_1$ and $G_2$ is in series with that across the electrodes $G_3$ and $G_4$ as shown in Fig. 4, or, in lieu of the series connection, such voltages are added in an external adder, thereby deriving an output signal voltage which is about two times as high as the voltage.

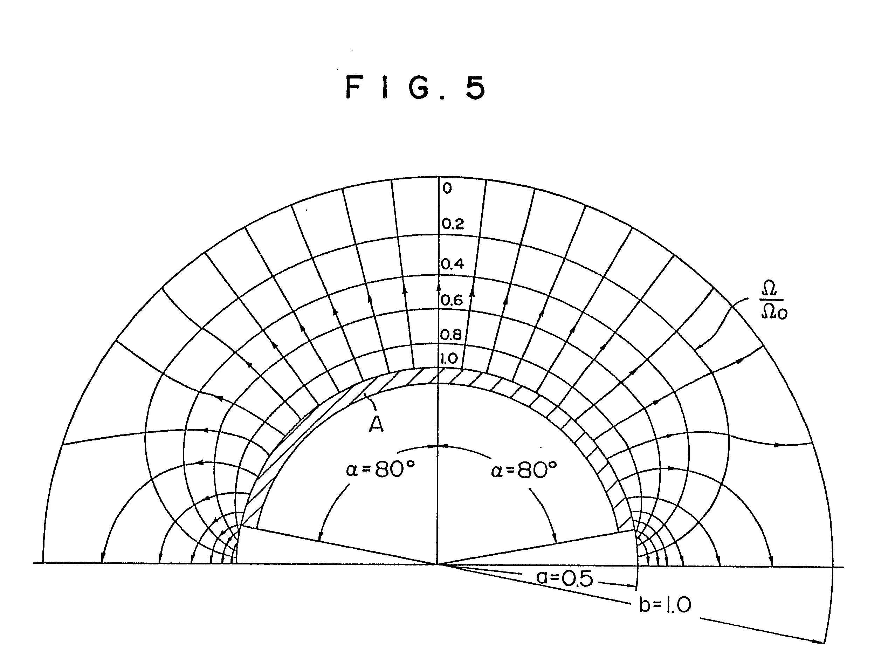

Fig. 5 shows the distribution of the calculated values of the magnetic potential and the lines of magnetic force when the magnetic poles A and B extend over the circumference angle 2 α of 160°, and the outer diameter a of the cone 2 is selected to be 1/2 of the inner diameter b of the pipe 1.

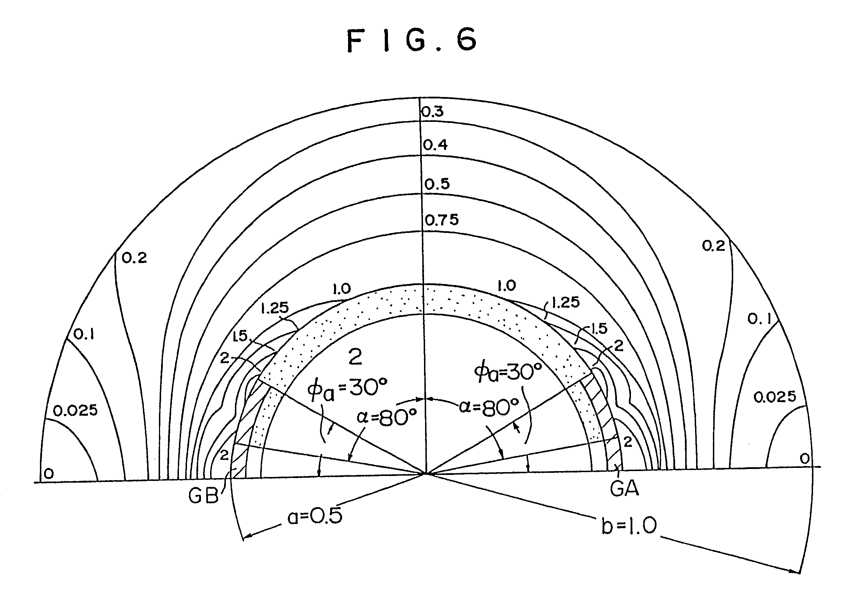

Fig. 6 shows the distribution of the calculated value of the level of the generated voltage when the electrodes GA and GB are arranged as shown in Fig. 3 and extend over a circumference angle 2 φa of 60°, and the magnetic circuit has a shape as shown in Fig. 5. The arrangement shown in Fig. 6 is especially advantageous for the electromagnetic flowmeter of the residual magnetism type.

It will be understood from the foregoing description that, in the measuring device according to the present invention, the magnetomotive force generating means is provided in the cone disposed inside of the flow-rate measuring pipe to provide a magnetic circuit of the so-called internal excitation type. The present invention is therefore advantageous in that the amount of leakage flux can be minimized, and the weight of the magnetic circuit can be reduced. Further, according to the present invention, the gap of the magnetic path, that is, the radial distance between the magnetic pole A or B and the outer yoke C can be shortened, hence, the diameter of the cone 2 or the diameter of the outer peripheral portion of the cone 2 carrying the magnetic poles A and B can be selected to be close to the inner diameter of the pipe 1. The present invention is therefore further advantageous in that the permeance of the gap can be increased for more effective utilization of the magnetic flux thereby correspondingly reducing the power consumption.

**Claims**

1. A measuring device for an electromagnetic flowmeter comprising; a flow-rate measuring pipe (1) having a generally circular cross-section and made of non-magnetic material, at least the inner surface of the measuring pipe (1) being an electrical insulator, or housing (2) of non-magnetic material located inside the measuring pipe (1) in coaxial relation therewith, the housing (2) containing an exciting coil (1) wound on an inner yoke (f) of magnetic material for applying a magnetic field in a direction orthogonal with respect to the flow direction of a fluid flowing through the measuring pipe (1) thereby generating a voltage in a direction orthogonal with respect to both the flow direction of the fluid and the direction of application of the magnetic field, at least one pair of electrodes (G) from which the induced voltage is taken, in use, for measuring the velocity of the fluid flowing through the measuring pipe (1), and electrically insulating supporting members (W) fixedly supporting said housing (2) in the measuring pipe (1) characterized by: an outer yoke (C) disposed outside of said measuring pipe (1) so as to surround the measuring pipe (1), a pair of magnetic poles (A, B) connected to said inner yoke (f) and disposed relative to said measuring pipe (1) in such a relation that the outer peripheral surfaces thereof are substantially spaced apart, in use, by the same distance from the inner peripheral surface of said measuring pipe (1), and each of said magnetic poles (A, B) extending over a predetermined angular range constituting a total circumference angle (2 α) substantially less than 360°.

2. A measuring device according to claim 1, wherein the total circumference angle (2 α) is 160°.

3. A measuring device according to Claim 1, characterized in that said electrodes (G) are provided on the outer peripheral surface of said housing (2) to align with each other on a diametrical line crossing the central axis of the housing (2) and are positioned substantially half-way between said magnetic poles (A, B).

4. A measuring device according to Claim 1, characterized in that said supporting members (W) comprise at least one pair of supporting members (W) arranged to align with each other on a diametrical line crossing the central axis of the measuring pipe (1), and said at least one pair of electrodes ($G_1$, $G_2$) are disposed on said supporting members (W).

**Patentansprüche**

1. Meßvorrichtung für einen elektromagnetischen Strömungsmesser, umfassend ein Strömungsratenmeßrohr (1), das einen generell kreisförmigen Querschnitt hat und aus einem nichtmagnetischen Material hergestellt ist, wobei wenigstens die innere Oberfläche des Meßrohrs (1) ein elektrischer Isolator ist, ein Gehäuse (2) aus nichtmagnetischem Material, das innerhalb des Meßrohrs (1) in koaxialer Beziehung zu demselben angeordnet ist, wobei das Gehäuse (2) eine Erregungsspule (1) enthält, die auf ein inneres Joch (f) aus magnetischem Material zum Anwenden eines magnetischen Felds in einer Richtung, die senkrecht bezüglich der Strömungsrichtung eines durch das Meßrohr (1) fließenden Strömungsmittels ist, gewickelt ist, so daß dadurch eine Spannung in einer Richtung erzeugt wird, welche senkrecht sowohl zur Strömungsrichtung des Strömungsmittels als auch zur Richtung der Anwendung des magnetischen Feldes ist, wenigstens ein Paar von Elektroden (G), von denen die induzierte Spannung im Gebrauch zur Messung des Geschwindigkeit des durch das Meßrohr (1) fließenden Strömungsmittels abgenommen wird, und elektrisch isolierende Halteteile (W), welche das Gehäuse (2) in dem Meßrohr (1) ortsfest halten, gekennzeichnet durch: ein äußeres Joch (C), des außerhalb des Meßrohrs (1) so angeordnet ist, daß es das Meßrohr (1) umgibt, ein Paar von Magnetpolen (A, B), die mit dem inneren Joch (f) verbunden und relativ zu dem Meßrohr (1) in einer solchen Beziehung angeordnet sind, daß die äußeren Umfangsoberflächen derselben im Gebrauch im wesentlichen um die gleiche Entfernung von der inneren Umfangsoberfläche des Meßrohrs (1) entfernt sind, und wobei sich jeder der Magnetpole (A, B) über einen vorbestimmten Winkelbereich erstreckt, der einen Gesamtumfangswinkel (2α) bildet, welcher wesentlich weniger als 360° ist.

2. Meßvorrichtung nach Anspruch 1, dadurch gekennzeichnet, daß der Gesamtumfangswinkel (2α) 160° ist.

3. Meßvorrichtung nach Anspruch 1, dadurch gekennzeichnet, daß die Elektroden (G) auf der äußeren Umfangsoberfläche des Gehäuses (2) so vorgesehen sind, daß sie miteinander auf einer Diametrallinie fluchten, welche die Mittelachse des Gehäuses (2) kreuzt, und daß sie im wesentlichen halbwegs zwischen den Magnetpolen (A, B) positioniert sind.

4. Meßvorrichtung nach Anspruch 1, dadurch gekennzeichnet, daß die Halteteile (W) wenigstens ein Paar von Halteteilen (W) umfassen, die so angeordnet sind, daß sie miteinander auf einer Diametrallinie fluchten, welche die Mittelachse des Meßrohrs (1) kreuzt, und daß das wenigstens eine Paar von Elektroden ($G_1$, $G_2$) auf den Halteteilen (W) angeordnet ist.

**Revendications**

1. Dispositif de mesure d'un débitmètre électromagnétique comprenant un tuyau de mesure de débit (1) présentant une surface généralement circulaire et réalisée en un matériau non magnétique, au moins une surface intérieure du tuyau de mesure (1) étant constituée par un isolateur électrique, un logement (2) en un matériau non magnétique situé à l'intérieur du tuyau de mesure (1) et coaxialement à celui-ci, le logement (2) contenant une bobine excitatrice (1) enroulée sur une culasse intérieure (f) en un matériau magnétique pour appliquer un champ magnétique dans une direction orthogonale par rapport à la direction d'écoulement d'un liquide circulant dans le tuyau de mesure (1), engendrant ainsi un tension en direction orthogonale par rapport à la fois à la direction du courant de liquide et à la direction de l'application du champ magnétique, au moins deux électrodes (G) à partir de l'une desquelles est prélevée, en utilisation, la tension induite pour mesurer la vitesse du liquide s'écoulant dans le tuyau de mesure (1), et des organes de support électriquement isolés (W) qui supportent de façcon fixe ledit logement (2) dans le tuyau de mesure (1), caractérisé par une culasse extérieure (C) disposée à l'extérieur dudit tuyau de mesure (1) de manière à entourer ce tuyau de mesure (1), deux pôles magnétiques (A, B) reliés à ladite culasse intérieure (f) et disposés par rapport audit tuyau de mesure (1) de manière que les surfaces périphériques extérieures de ce dernier soient sensiblement espacées, en utilisation, de la même distance par rapport à la surface périphérique intérieure dudit tuyau de mesure (1), et chacun desdits pôles magnétiques (A, B) s'étendant sur une plage angulaire prédéterminée constituant un angle circonférentiel total $(2\alpha)$ sensiblement inférieure à 360°C.

2. Dispositif de mesure selon la revendication 1, caractérisé en ce que l'angle circonférentiel total $(2\alpha)$ est de 160°.

3. Dispositif de mesure selon la revendication 1, caractérisé en ce que lesdites électrodes (G) sont prévues sur la surface périphérique extérieure dudit logement (2) de manière à être en alignement l'une avec l'autre sur une ligne diamétrale traversant l'axe central du logement (2) et sont positionnées sensiblement à mi-chemin entre lesdits pôles magnétiques (A, B).

4. Dispositif de mesure selon la revendication 1, caractérisé en ce que lesdits organes de support (W) comprennent au moins deux organes de support (W) disposés en ligne l'un par rapport à l'autre sur une ligne diamétrale traversant l'axe central du tuyau de mesure (1), et lesdites deux électrodes $(G_1, G_2)$ sont disposées sur lesdits organes de support (W).

0 069 459

FIG.1A

EXCITING CURRENT

FIG.1B

EXCITING CURRENT

1

# F I G . 2

LINE OF
MAGNETIC
FORCE

A

B

C

MAGNETIC
EQUIPOTENTIAL
LINE

# F I G . 3

G     G

# F I G . 4

C

A

I

2

W

G₂

OUTPUT
VOLTAGE

G₁

W

G₄

G₃

B

2

# F I G . 5

# F I G . 6

0 069 459